# EUROPÄISCHE PATENTSCHRIFT

(11) **EP 2 134 560 B1**
(45) Veröffentlichungstag und Bekanntmachung des Hinweises auf die Patenterteilung: **06.09.2017**
(21) Anmeldenummer: 08716370.5
(22) Anmeldetag: 07.03.2008
(51) Int. Cl.: B60K 6/48, B60K 6/40, B60W 10/06, B60W 10/08, B60W 10/30, B60W 20/00, B60W 30/18, B60K 25/06, B60T 17/02

(54) **HYBRIDANTRIEB, VERFAHREN ZUM STEUERN EINES DRUCKLUFTKOMPRESSORS UND KRAFTFAHRZEUG MIT EINEM HYBRIDANTRIEB**
HYBRID DRIVE, METHOD FOR CONTROLLING A COMPRESSED-AIR COMPRESSOR AND MOTOR VEHICLE EQUIPPED WITH SAID HYBRID DRIVE
ENTRAÎNEMENT HYBRIDE, PROCÉDÉ DE COMMANDE D'UN COMPRESSEUR À AIR COMPRIMÉ ET VÉHICULE À MOTEUR ÉQUIPÉ D'UN ENTRAÎNEMENT HYBRIDE

(30) Priorität: 08.03.2007 DE 102007011257
(43) Veröffentlichungstag der Anmeldung: 23.12.2009
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schönmann, Kurt
(86) Internationale Anmeldenummer: PCT/EP2008/001857
(87) Internationale Veröffentlichungsnummer: WO 2008/107209

(56) Entgegenhaltungen:
- EP-A- 1 055 547
- EP-A- 1 749 685
- WO-A-82/00615
- DE-A1- 19 748 423
- DE-B- 1 119 591

## Beschreibung

Die Erfindung betrifft einen Hybridantrieb für Kraftfahrzeuge mit einem Druckluftkompressor, einem Verbrennungsmotor, einem Elektromotor und einem Lastverteilungsgetriebe zur Vermittlung der von den Antrieben von Verbrennungsmotor und Elektromotor gelieferten Antriebskraft auf einen Hauptabtrieb, an den Antriebsräder des Kraftfahrzeugs gekoppelt sind.

In nicht beanspruchter Weise beschrieben ist weiterhin ein Verfahren zum Steuern eines Druckluftkompressors, der für die Druckluftversorgung eines mit einem Hybridantrieb ausgestatteten Kraftfahrzeug vorgesehen ist, wobei das Kraftfahrzeug einen Verbrennungsmotor, einen Elektromotor und ein Lastverteilungsgetriebe zur Vermittlung der von den Antrieben von Verbrennungsmotor und Elektromotor gelieferten Antriebskraft auf einen Hauptabtrieb aufweist, an den Antriebsräder des Kraftfahrzeugs gekoppelt sind.

Ferner betrifft die Erfindung ein Kraftfahrzeug mit einem erfindungsgemäßen Hybridantrieb.

Hybridantriebe umfassen zwei Antriebsmotoren, über die ein Hybridfahrzeug angetrieben werden kann, nämlich einen Verbrennungsmotor und einen Elektromotor. Während der Verbrennungsmotor mit flüssigen oder gasförmigen Brennstoffen beliefert wird, erfolgt der Antrieb durch den Elektromotor unter Einsatz gespeicherter elektrischer Energie. Die Motoren können je nach der vorliegenden Fahrsituation wechselweise oder auch gleichzeitig betrieben werden. Befindet sich das Fahrzeug im Schubbetrieb, insbesondere bei einer Bergabfahrt, so kann über den Antriebsstrang rückwärts Energie auf den Elektromotor übertragen werden, wobei dieser dann als Generator zum Aufladen der Batterie arbeitet. Um die Antriebsleistungen der beiden Motoren sinnvoll in den Antriebsstrang anzukoppeln, ist ein Lastverteilungsgetriebe vorgesehen.

Zahlreiche Fahrzeuge, insbesondere Nutzfahrzeuge, besitzen einen Druckluftkompressor. Mit diesem wird Druckluft erzeugt, die Druckluftverbrauchern zur Verfügung gestellt werden kann, insbesondere einem pneumatischen Bremssystem, aber auch beispielsweise einer Luftfederung oder einer Liftachseinrichtung. Da für die Erzeugung von Druckluft Energie benötigt wird, ist man bestrebt, die Betriebsphasen des Druckluftkompressors möglichst ökonomisch zu wählen, so dass einerseits keine unnötige Drucklufterzeugung stattfindet, andererseits aber sichergestellt ist, dass zu jedem Zeitpunkt ein ausreichender Druckluftvorrat zur Verfügung steht, auch dann wenn druckluftverbrauchsintensive Fahrsituationen vorliegen. Besonders bestrebt ist man in diesem Zusammenhang, Schubphasen des Kraftfahrzeugs auszunutzen, um die in kinetische Energie umgesetzte potentielle Energie, beispielsweise bei einer Bergabfahrt, auch zur Erzeugung von Druckluft zu nutzen.

Der Erfindung liegt die Aufgabe zugrunde, einen Hybridantrieb für Kraftfahrzeuge und ein Verfahren zum Steuern eines solchen Hybridantriebs zur Verfügung zu stellen, wobei eine effiziente Nutzung von Schubphasen des Fahrzeugs gewährleistet sein soll.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung baut auf dem gattungsgemäßen Hybridantrieb dadurch auf, dass der Druckluftkompressor über den Hauptabtrieb antreibbar ist. Durch diese Anordnung des Druckluftkompressors im Antriebssystem ist sichergestellt, dass der Druckluftkompressor sowohl von dem Verbrennungsmotor als auch von dem Elektromotor angetrieben werden kann. Weiterhin können im Schubbetrieb gleichzeitig der Elektromotor und der Kompressor über ihre Kopplung zum Hauptantrieb angetrieben werden. Dies ermöglicht einerseits die Erzeugung elektrischer Energie zum Laden einer Batterie und andererseits die Erzeugung von Druckluft während der Schubphasen des Fahrzeugs.

Es kann vorgesehen sein, dass der Hauptabtrieb in das Lastverteilungsgetriebe integriert ist. Das Getriebe kann somit von Vornherein in der Weise ausgelegt werden, dass die erfindungsgemäße Anbindung der Motoren und des Kompressors an das Lastverteilungsgetriebe erfolgen kann. Es ist auch möglich, eine mechanische Kopplung zwischen der Kupplung und dem Lastverteilungsgetriebe über eine außerhalb des eigentlichen Lastverteilungsgetriebes liegende Hauptabtriebseinheit zur Verfügung zu stellen.

Die Erfindung ist in besonders vorteilhafter Weise dadurch weitergebildet, dass der Druckluftkompressor über eine schaltbare Kupplung mit dem Hauptantrieb gekoppelt ist, über die der Druckluftkompressor zwischen einer Förderphase und einer Nichtförderphase überführbar ist. Die schaltbare Kupplung ermöglicht somit durch Trennen der Kupplung eine Einsparung von Energie, da der Kompressor in diesem Zustand nicht angetrieben wird.

Alternativ kann vorgesehen sein, dass der Druckluftkompressor einen pneumatischen Schalteingang aufweist und durch Belüften des pneumatischen Schalteingangs von einer Förderphase in eine durch Leerlauf des Druckluftkompressors gekennzeichnete Nichtförderphase überführbar ist. Auch durch die Überführung des Druckluftkompressors in eine Leerlaufphase kann Energie eingespart werden, nämlich dann, wenn keine Druckluft benötigt wird.

Erfindungsgemäß ist vorgesehen, dass ein elektrisch ansteuerbares Schaltventil zum Umschalten des Druckluftkompressors zwischen der Förderphase und der Nichtförderphase vorgesehen ist. Der Kompressor kann daher über pneumatische Stellglieder bedient werden, die ausreichende Schaltkräfte zur Verfügung stellen, während die eigentlichen Steuersignale elektrischer Natur und insofern mit Hilfe einer modernen Fahrzeugelektronik erzeugbar sind.

Erfindungsgemäß ist vorgesehen, dass das elektrisch ansteuerbare Schaltventil von einer Motorsteuerung ansteuerbar ist.

Eine Druckluftversorgungseinrichtung ist eine Komponente, die in jedem Nutzfahrzeug, das eine pneumatisch betriebene Bremsanlage aufweist, vorzusehen ist. Die Druckluftversorgungseinrichtung sorgt für die Reinigung und die Trocknung der Druckluft. Durch die Druckluftversorgungseinrichtung werden weiterhin häufig Druckreglerfunktionen sowie ein Mehrkreisschutzventil zur Sicherstellung einer Füllreihenfolge und zur Absicherung einzelner Verbraucherkreise gegeneinander zur Verfügung gestellt. Eine solche Druckluftversorgungseinrichtung hat vielfach eine eigene elektronische Steuereinheit, oder sie wird von elektrischen Signalen einer Steuereinheit angesteuert, die auch andere Steuerungsfunktionen im Fahrzeug wahrnimmt, beispielsweise von einem Fahrzeugrechner. In jedem Fall kann es sinnvoll sein, den Kompressor mittels Signalen zu steuern, die von der die Druckluftversorgungseinrichtung steuernden Elektronik geliefert werden, da hier die primären Informationen im Hinblick auf den Betriebszustand der Druckluftversorgung zusammenlaufen, beispielsweise in den Betriebsbremskreisen erfasste Drücke, Temperaturen etc. Erfindungsgemäß ist vorgesehen, dass die Motorsteuerung, die auch die Steuerung des Verbrennungsmotors und des Lastverteilungsgetriebes übernimmt, die Steuerung der Druckluftversorgungseinrichtung übernimmt.

Die Erfindung betrifft weiterhin ein Kraftfahrzeug mit einem erfindungsgemäßen Hybridantrieb.

Die Erfindung wird nun mit Bezug auf die begleitenden Zeichnungen anhand besonders bevorzugter Ausführungsformen beispielhaft erläutert.

Es zeigen:
- Figur 1: eine schematische Darstellung einer ersten Ausführungsform eines Hybridantriebs sowie damit in Verbindung stehende Fahrzeugkomponenten;
- Figur 2: eine schematische Darstellung einer zweiten Ausführungsform eines Hybridantriebs sowie damit in Verbindung stehende Fahrzeugkomponenten; und
- Figur 3: ein Flussdiagramm zur Erläuterung eines nicht beanspruchten Verfahrens.

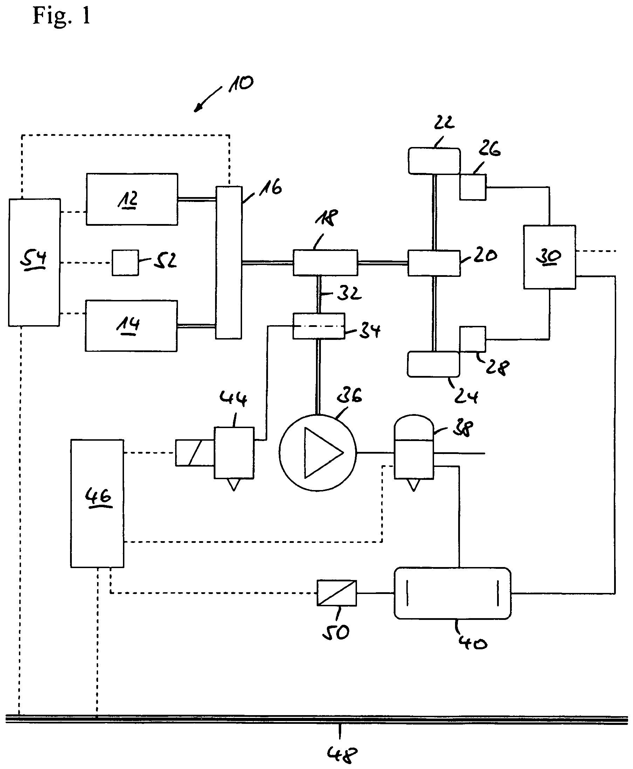

Figur 1 zeigt eine schematische Darstellung einer ersten Ausführungsform eines Hybridantriebs sowie damit in Verbindung stehende Fahrzeugkomponenten. In dieser Darstellung sind die funktionellen Komponenten mit durchgezogenen Linien, unterbrochenen Linien und Doppellinien untereinander verbunden. Dabei kennzeichnen durchgezogene Linien Druckluftverbindungen, unterbrochene Linien elektrische Verbindungen und Doppellinien Wellen zur Übertragung mechanischer Kraft. Ein Hybridantrieb 10 umfasst einen Verbrennungsmotor 12 und einen Elektromotor 14. Die Motoren 12, 14 stehen mit einem Motorsteuergerät 54 elektrisch in Verbindung. Das Motorsteuergerät 54 steht weiterhin mit einer Batterie 52 in Verbindung. Mechanisch sind die Motoren 12, 14 mit einem Lastverteilungsgetriebe 16 gekoppelt, dem ein Hauptabtrieb 18 nachgelagert ist. Das Lastverteilungsgetriebe 16 wird ebenfalls durch die Motorsteuerung 54 gesteuert. Der Hauptabtrieb 18 stellt die Verbindung des Lastverteilungsgetriebes 16 mit einem Differenzialgetriebe 20 zur Verfügung, von wo aus die Kraft auf die Antriebsräder 22, 24, insbesondere der Hinterachse des Kraftfahrzeugs übertragen wird. Die Antriebsräder 22 stehen mit Bremsaktuatoren 26, 28 in Beziehung, die von einer Bremsdrucksteuereinrichtung 30 mit Druckluft angesteuert werden. An den Hauptabtrieb 18 ist weiterhin eine Kupplungseingangswelle 32 gekoppelt, die zur Eingangsseite einer Kupplung 34 führt. Ausgangsseitig ist die Kupplung 34 mit einem Kompressor 36 gekoppelt. Der Kompressor 36 steht über eine Druckluftversorgungseinrichtung 38, die über einen Lufttrockner, einen Druckregler und ein Mehrkreisschutzventil verfügt, mit einem Druckluftvorratsbehälter 40 in Verbindung. Über diesen Druckluftvorratsbehälter 40 wird die zuvor erwähnte Bremsdrucksteuerung 30 mit Druckluft versorgt. Der Kompressor 36 kann durch Trennen der Kupplung 34 in eine Nichtförderphase überführt werden, wobei zu diesem Zweck einem Steuereingang der Kupplung 34 Druckluft zugeführt wird. Die Steuerung der Kupplung 34 erfolgt über ein elektrisch ansteuerbares Ventil 44, das vorzugsweise als 3/2-Wegeventil ausgelegt ist, um so einen entlüftenden und einen belüftenden Zustand für einen pneumatischen Steuereingang der Kupplung 34 zur Verfügung zu stellen. Das 3/2-Wegeventil 44 wird von einer elektronischen Steuereinheit 46 angesteuert, die auch der Ansteuerung der Druckluftversorgungseinrichtung 38 dient. Die Steuereinheit 46 kann in die Druckluftversorgungseinrichtung 38 integriert sein. Die Steuerung 46 steht weiterhin mit einem CAN-Bus des Nutzfahrzeugs in Verbindung, der verschiedene Signalerzeuger und Signalempfänger des Nutzfahrzeugs miteinander verbindet. Beispielsweise ist auch die Motorsteuerung 54 mit dem CAN-Bus 48 gekoppelt. Die elektronische Steuereinheit 46 zur Ansteuerung des 3/2-Wegeventils 44 und der Druckluftversorgungseinrichtung 38 empfängt weiterhin ein Ausgangssignal eines Drucksensors 50, der den Betriebsdruck im Druckluftvorratsbehälter 40 erfasst. Neben der dargestellten Ausführungsform ist es möglich, dass die Steuerung aller Funktionen von dem Motorsteuergerät 54 wahrgenommen wird, wie es erfindungsgemäß vorgesehen ist.

Im Betrieb des Fahrzeugs wird dieses entweder von dem Verbrennungsmotor 12 oder von dem Elektromotor 14 angetrieben. Der Elektromotor 14 bezieht zu diesem Zweck seine Energie aus der Batterie 52. Welcher Motor 12, 14 aktiv ist und wie die erzeugte Antriebskraft auf den Antriebsstrang übertragen wird, wird die Motorsteuerung 54 bestimmt und durch das Lastverteilungsgetriebe 16 vermittelt. Bei Druckluftbedarf fördert der Kompressor 36, indem Energie über den Hauptabrieb 18 bezogen wird, die im Normalbetrieb des Kraftfahrzeugs von dem Verbrennungsmotor 12 und/oder dem Elektromotor 14 geliefert wird. Ebenfalls wird Antriebskraft auf die Antriebsräder 22, 24 übertragen. Tritt das Kraftfahrzeug nun in einen Schubbetrieb ein, so kehrt sich die Kraftübertragung im Antriebsstrang um, das heißt die Kraft wird von den Antriebsrädern 22, 24 über das Differenzialgetriebe 20, den Hauptabtrieb 18 und das Lastverteilungsgetriebe 16 auf die Motoren 12, 14 übertragen. Bei geeigneter Auslegung des Elektromotors 14 und der Motorsteuerung 54 kann der Elektromotor 14 als Generator arbeiten, so dass die Batterie 52 aufgeladen werden kann. Gleichzeitig kann in der Schubphase des Fahrzeugs der Kompressor 36 angetrieben werden, ohne dass hierfür Brennstoff oder elektrische Energie aus der Batterie 52 benötigt würden. Um diese nützliche Schubphase zu erkennen, wird das Kraftfahrzeug permanent auf das Vorliegen einer solchen Schubphase überwacht, beispielsweise mittels der Motorsteuerung 54. Wird ermittelt, dass eine Schubphase vorliegt, so wird in jedem Fall in den Generatorbetrieb des Elektromotors 14 eingetreten. Befindet sich zusätzlich der Systemdruck unterhalb eines Maximaldrucks, so kann der Kompressor 36 in die Förderphase überführt werden. Beispielsweise kann vorgesehen sein, dass immer dann, wenn das Motorsteuergerät 16 auf Generatorbetrieb umgestellt hat, ein Signal an das 3/2-Wegeventil 44 zum Trennen der Kupplung 34 ausgegeben wird. Erfindungsgemäß wird das Signal dem 3/2-Wegeventil 44 direkt von der Motorsteuerung 54 übermittelt. Im dargestellten Ausführungsbeispiel wird das Signal jedoch mittelbar über den CAN-Bus 48 und die elektronische Steuereinheit 46 der Druckluftversorgungseinrichtung 38 zur Verfügung gestellt.

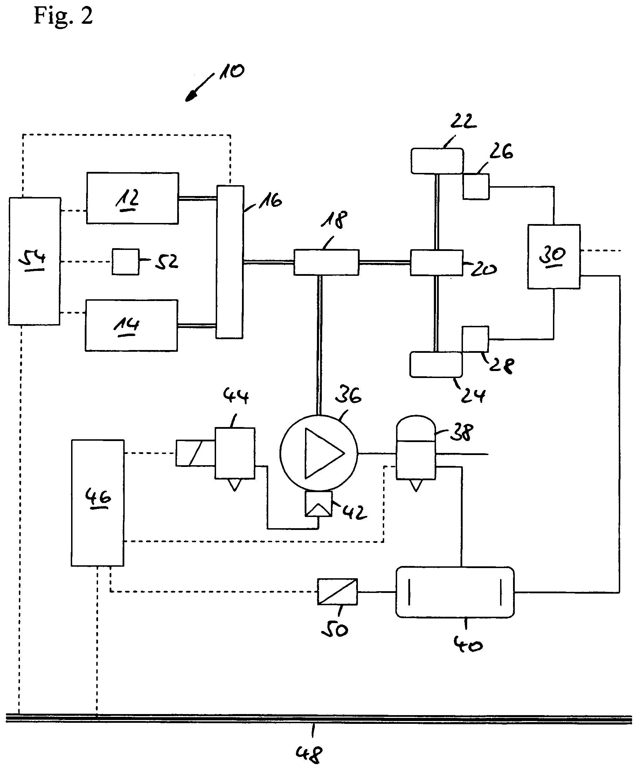

Figur 2 zeigt eine schematische Darstellung einer zweiten Ausführungsform eines erfindungsgemäßen Hybridantriebs sowie damit in Verbindung stehende Fahrzeugkomponenten. Im Gegensatz zu Figur 1 ist bei dem Ausführungsbeispiel gemäß Figur 2 keine Kupplung zwischen dem Kompressor 36 und dem Hauptabtrieb 18 vorgesehen. Stattdessen hat der Kompressor 36 einen pneumatischen Steuereingang 42. Wird dieser pneumatische Steuereingang 42 durch das 3/2-Wegeventil 44 belüftet, so schaltet der Kompressor 36 in Leerlaufbetrieb um. Die Ausführungsform gemäß Figur 2 arbeitet insofern steuerungstechnisch identisch zu der Ausführungsform gemäß Figur 1, so dass auf die oben stehenden Ausführungen verwiesen werden kann.

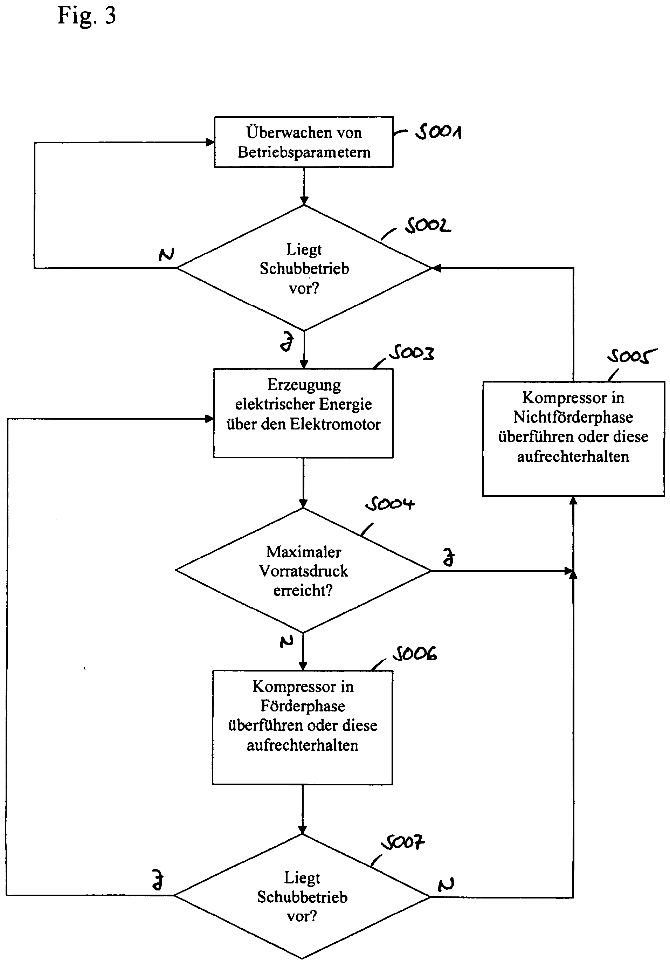

Figur 3 zeigt ein Flussdiagramm zur Erläuterung eines nicht beanspruchten Verfahrens. Gemäß Schritt S001 werden permanent Betriebsparameter überwacht, beispielsweise der Fahrzustand des Fahrzeugs im Hinblick auf den Schubbetrieb. Wird in S002 ermittelt, dass Schubbetrieb vorliegt, so wird in Schritt S003 dazu übergegangen, elektrische Energie über den Elektromotor zu erzeugen. Solange ein nicht vorliegender Schubbetrieb in Schritt S002 ermittelt wird, werden weiterhin kontinuierlich die Betriebsparameter gemäß Schritt S001 überwacht. Im Anschluss an Schritt S003, das heißt während der Erzeugung elektrischer Energie über den Elektromotor, wird in Schritt S004 ermittelt, ob ein maximaler Vorratsdruck erreicht ist. Ist dies der Fall, so wird gemäß Schritt S005 der Kompressor in eine Nichtförderphase überführt, oder eine solche wird aufrechterhalten. Im Anschluss an Schritt S005 wird weiterhin gemäß Schritt S002 abgefragt, ob der Schubbetrieb vorliegt. Wird in Schritt S004 nun ermittelt, dass ein maximaler Vorratsdruck nicht erreicht ist, so wird der Kompressor gemäß Schritt S006 in eine Förderphase überführt, oder eine solche wird aufrechterhalten. Im Anschluss hieran wird gemäß Schritt S007 wiederum überprüft, ob nach wie vor der Schubbetrieb vorliegt. Ist dies der Fall, so wird gemäß Schritt S003 mit der Erzeugung elektrischer Energie fortgefahren. Wird in Schritt S007 ermittelt, dass kein Schubbetrieb mehr vorliegt, so wird der Kompressor gemäß Schritt S005 in seine Nichtförderphase überführt. Nachfolgend wird gemäß Schritt S002 wiederum überprüft, ob Schubbetrieb vorliegt. Da dies in der Regel nicht der Fall sein wird, fährt das Verfahren mit dem Überwachen der Betriebsparameter gemäß Schritt S001 fort. Andernfalls kann wieder in die Erzeugung elektrischer Energie über den Elektromotor gemäß Schritt S003 und möglicherweise in die Erzeugung von Druckluft unter Ausnutzung des Schubbetriebs eingetreten werden.

### Bezugszeichenliste:

- 10: Hybridantrieb
- 12: Verbrennungsmotor
- 14: Elektromotor
- 16: Lastverteilungsgetriebe
- 18: Hauptabtrieb
- 20: Differenzialgetriebe
- 22: Antriebsrad
- 24: Antriebsrad
- 26: Bremsaktuator
- 28: Bremsaktuator
- 30: Bremsdrucksteuerung
- 32: Kupplungseingangswelle
- 34: Kupplung
- 36: Kompressor
- 38: Druckluftversorgungseinrichtung
- 40: Druckluftvorratsbehälter
- 42: Steuereingang
- 44: Ventil
- 44: 3/2-Wegeventil
- 46: Steuereinheit
- 48: CAN-Bus
- 50: Drucksensor
- 52: Batterie
- 54: Motorsteuerung

## Patentansprüche

1. Hybridantrieb (10) für Kraftfahrzeuge, mit
- einem Verbrennungsmotor (12),
- einem Elektromotor (14) und
- einem Lastverteilungsgetriebe (16) zur Vermittlung der von den Antrieben von Verbrennungsmotor und Elektromotor gelieferten Antriebskraft auf einen Hauptabtrieb (18), an den Antriebsräder (22, 24) des Kraftfahrzeugs gekoppelt sind,
**dadurch gekennzeichnet,**
- **dass** ein Druckluftkompressor (36) über den Hauptabtrieb (18) antreibbar ist und
- **dass** eine Motorsteuerung (54) vorgesehen ist, die eine Steuerung einer Druckluftversorgungseinrichtung übernimmt und die weiterhin auch den Verbrennungsmotor (12), den Elektromotor (14), das Lastverteilungsgetriebe (16) und ein elektronisch ansteuerbares Schaltventil (44) steuert,
- wobei das elektronisch ansteuerbare Schaltventil (44) zum Umschalten des Druckluftkompressors (36) zwischen einer Förderphase und einer Nichtförderphase vorgesehen ist.

2. Hybridantrieb nach Anspruch 1, **dadurch gekennzeichnet, dass** der Hauptabtrieb (18) in das Lastverteilungsgetriebe (16) integriert ist.

3. Hybridantrieb nach Anspruch 1 oder 2, **dadurch gekennzeichnet, dass** der Druckluftkompressor (36) über eine schaltbare Kupplung (34), die von dem elektronisch ansteuerbares Schaltventil (44) ansteuerbar ist, über die der Druckluftkompressor (36) zwischen einer Förderphase und einer Nichtförderphase überführbar ist, mit dem Hauptabtrieb (18) gekoppelt ist.

4. Hybridantrieb nach einem der Ansprüche 1 oder 2, **dadurch gekennzeichnet, dass** der Druckluftkompressor (36) einen von dem elektronisch ansteuerbares Schaltventil (44) ansteuerbaren pneumatischen Schalteingang (42) aufweist und durch Belüften des pneumatischen Schalteingangs von einer Förderphase in eine durch Leerlauf des Druckluftkompressors gekennzeichnete Nichtförderphase überführbar ist.

5. Kraftfahrzeug mit einem Hybridantrieb (10) nach einem der Ansprüche 1 bis 4.

## Claims

1. Hybrid drive (10) for a motor vehicle, comprising
- an internal combustion engine (12),
- an electric motor (14) and
- a load distribution gearbox (16) for transmitting the power delivered by drives of the internal combustion engine and the electric motor to a main output (18), to which the drive wheels (22, 24) of the motor vehicle are connected,
**characterised in that**
- an air compressor (36) can be driven via the main output (18) and
- an engine control unit (54) is provided, which undertakes a control of a compressed air supply device and which further controls the internal combustion engine (12), the electric motor (14), the load distribution gearbox (16) and an electronically selectable switching valve (44),
- wherein the electronically selectable switching valve (44) is provided for switching the air compressor (36) between a delivery phase and a non-delivery phase.

2. Hybrid drive according to claim 1, **characterised in that** the main output (18) is integrated into the load distribution gearbox (16).

3. Hybrid drive according to claim 1 or 2, **characterised in that** the air compressor (36) is coupled to the main output (18) via a switchable clutch (34), which is controllable by the electronically selectable switching valve (44) and via which the air compressor (36) can be switched between a delivery phase and a non-delivery phase.

4. Hybrid drive according to claim 1 or 2, **characterised in that** the air compressor (36) has a pneumatic switching inlet (42) controllable by the electronically selectable switching valve (44) and can be moved by ventilating the pneumatic switching inlet from a delivery phase into a non-delivery phase **characterised by** the idling of the air compressor.

5. Motor vehicle with a hybrid drive (10) according to any of claims 1 to 4.

## Revendications

1. Entraînement (10) hybride pour des véhicules automobiles, comprenant
- un moteur (12) à combustion interne,
- un moteur (14) électrique et
- une transmission (16) de répartition de charge, pour donner la force d'entraînement fournie par les entraînements du moteur de transmission et du moteur électrique, à une prise de mouvement (18) principale, à laquelle sont accouplées les roues (22, 24) motrices du véhicule automobile,
**caractérisé**
- **en ce qu'**un compresseur (36) d'air comprimé peut être entraîné par la prise de mouvement (18) principale et
- **en ce qu'**il est prévu une commande (54) de moteur, qui prend en charge une commande d'un dispositif d'alimentation en air comprimé, et qui commande en outre également le moteur (12) à combustion interne, le moteur (14) électrique, la transmission (16) de répartition de charge et une soupape (44) de commutation pouvant être commandée électroniquement,
- dans laquelle la soupape (44) de commutation, pouvant être commandée électroniquement, est prévue pour faire passer le compresseur (36) d'air comprimé entre une phase de refoulement et une phase de non refoulement.

2. Entraînement hybride suivant la revendication 1, **caractérisé en ce que** la prise de mouvement (18) principale est intégrée à la transmission (16) de répartition de charge.

3. Entraînement hybride suivant la revendication 1 ou 2, **caractérisé en ce que** le compresseur (36) d'air comprimé peut être accouplé à la prise de mouvement (18) principale par un embrayage (34) pouvant être enclenché, qui peut être commandé par la soupape (44) de commutation pouvant être commandée électroniquement et par lequel le compresseur (36) d'air comprimé peut passer entre une phase de refoulement et une phase de non refoulement.

4. Entraînement hybride suivant l'une des revendications 1 ou 2, **caractérisé en ce que** le compresseur (36) d'air comprimé a une entrée (42) de commutation pneumatique pouvant être commandée par la soupape (44) de commutation, pouvant être commandée électroniquement, et peut passer, par alimentation de l'entrée de commutation pneumatique, d'une phase de refoulement à une phase de non refoulement **caractérisée par** une marche à vide du compresseur d'air comprimé.

5. Véhicule automobile ayant un entraînement (10) hybride suivant l'une des revendications 1 à 4.
